# EUROPEAN PATENT APPLICATION

(11) **EP 4 826 474 A1**
(43) Date of publication of application: **21.10.2026**
(21) Application number: 26167990.6
(22) Date of filing: 26.03.2026
(51) Int. Cl.: G05B 19/4093, G05B 19/409

(54) **MACHINE TOOL SYSTEM AND APPLICATION PROGRAM**

(30) Priority: 07.04.2025 JP 2025063260
(71) Applicant: Star Micronics Co., Ltd., Shizuoka-shi, Shizuoka 422-8654 (JP)
(72) Inventor: Suzuki, Shinichiro, Shizuoka-shi, Shizuoka, 422-8654 (JP); Kobayashi, Koichi, Shizuoka-shi, Shizuoka, 422-8654 (JP)
(74) Representative: Grünecker Patent- und Rechtsanwälte PartG mbB

(57) **Abstract**

Provided is a machine tool system and an application program with which a file associated with a machining program can be stored without using a storage unit of a machine tool.

In a machine tool system including a machine tool that machines a workpiece in accordance with a machining program and a mobile terminal capable of communicating with the machine tool, the mobile terminal includes a mobile storage unit and a link information generation unit that generates link information for associating the machining program with a specific file, and the link information generation unit stores the generated link information in the mobile storage unit, and stores the specific file associated with the machining program in the mobile storage unit as an associated file.

## Description

### Technical Field

The present invention relates to a machine tool system having a machine tool that machines a workpiece in accordance with a machining program and a mobile terminal capable of communicating with the machine tool, and an application program installed in the mobile terminal.

### Background Art

In a known machine tool system, an image of a workpiece on which machining by a machine tool has been completed is captured by a mobile terminal, and an image file obtained by the imaging is transmitted from the mobile terminal to the machine tool, whereupon the image file and a machining program are stored in the machine tool in association with each other (for example, see Japanese Patent No. 6374467). A machine tool system in which an image file of a workpiece on which machining has been completed, transmitted from a mobile terminal to a machine tool, and the machining program by which the workpiece was machined are automatically stored in the machine tool in association with each other has also been proposed (for example, see WO 2023/53459). In these machine tool systems, when the user of the machine tool selects a machining program, the machining program and an image of the workpiece on which machining has been completed are displayed simultaneously on a display unit of the machine tool. Thus, the user of the machine tool can easily recognize the shape of the workpiece machined by the machining program stored in the machine tool.

### Summary of the Invention

In the machine tool systems disclosed in Japanese Patent No. 6374467 and WO 2023/53459, the image file associated with the machining program is stored in the machine tool. However, since a storage unit typically used in a machine tool does not have a large capacity, when the image file is stored in the storage unit of the machine tool, the volume of machining programs that can be stored in the storage unit decreases.

The present invention has been designed in consideration of the problem described above, and an object thereof is to provide a machine tool system and an application program with which a file associated with a machining program can be stored without using a storage unit of a machine tool.

A machine tool system of the present invention, for solving the problem described above, is a machine tool system including a machine tool that machines a workpiece in accordance with a machining program, and a mobile terminal capable of communicating with the machine tool, wherein the mobile terminal includes a link information generation unit that generates link information for associating the machining program with a specific file, and a mobile storage unit, and the link information generation unit stores the generated link information in the mobile storage unit, and stores the specific file associated with the machining program in the mobile storage unit as an associated file.

According to this machine tool system, since the link information and the associated file are stored in the mobile storage unit, the link information and the associated file can be stored in the machine tool system without using a storage unit of the machine tool.

Here, the link information generation unit may copy the specific file and store the copied specific file in the mobile storage unit as the associated file. Further, the link information generation unit may generate the link information as information for associating the specific file stored in the mobile terminal with the machining program stored in the machine tool. Furthermore, the link information generation unit may store information indicating the machining program in the mobile storage unit. It should be noted that the information indicating the machining program may be the name of the machining program. In addition, the link information generation unit may display information indicating the machining program and the associated file associated with the machining program at the same time on a display unit of the mobile terminal.

In this machine tool system, the link information generation unit may store at least one of an image file of the workpiece after machining, a drawing file showing the workpiece after machining, a moving image file showing a normal machining operation of the machine tool, a tooling list file showing tools necessary for the machining and attachment positions, and a process chart file showing the order of the machining in the mobile storage unit as the associated file.

Selection of the machining program is made easier by storing the image file or the drawing file in the mobile storage unit as the associated file, recognizing an abnormal operation of the machine tool is made easier by storing the moving image file in the mobile storage unit as the associated file, and preparation work is made easier by storing the tooling list file or the process chart file in the mobile storage unit as the associated file.

In this machine tool system, the link information generation unit may store the associated file in the mobile storage unit in a state in which the associated file can be modified only when the link information generation unit is used.

In so doing, situations in which the name or content of the associated file is unintentionally modified can be prevented.

Here, the link information generation unit may store the associated file in the mobile storage unit in a state in which the file can be viewed only when the link information generation unit is used.

In this machine tool system, the link information generation unit may form a dedicated area that can be modified only when the link information generation unit is used in the mobile storage unit, and when a file stored in a normal area that can be modified without using the link information generation unit is associated with the machining program as the specific file, the link information generation unit may copy the file located in the normal area and store the copied file in the dedicated area as the associated file.

Even if the file stored in the normal area is altered, the associated file stored in the dedicated area is not affected, and therefore the association between the machining program and the associated file is not unintentionally deleted. Moreover, since the file remains in the normal area, the file can be used without using the link information generation unit.

Here, the link information generation unit may form the dedicated area in the mobile storage unit as an area that can be viewed only when the link information generation unit is used. In other words, the dedicated area may be an area that cannot be viewed unless the link information generation unit is used. When the link information generation unit associates a file stored in the normal area with the machining program as the specific file, the link information generation unit may move the file in the normal area to the dedicated area where the file cannot be viewed and store the file therein as the associated file. Thus, it is possible to prevent the information in the associated file from leaking.

In this machine tool system, when the name of a file stored in the mobile storage unit matches the name of the machining program, the link information generation unit may generate the link information for associating the file with the machining program as the specific file.

Thus, the machining program and the specific file can be associated simply by matching the name of the machining program with the name of the specific file, and thus the operability of the machine tool system is improved. It should be noted that the match in this case may be a partial match in which the name of the machining program is included in a part of the name of the file. Alternatively, the match may be a perfect match in which the name of the file and the name of the machining program match exactly.

In this machine tool system, when the name of a file stored in the mobile storage unit matches a comment written at the beginning of the machining program, the link information generation unit may generate the link information for associating the file with the machining program as the specific file.

Thus, the machining program and the specific file can be associated simply by matching the comment written at the beginning of the machining program with the name of the specific file, and thus the operability of the machine tool system is improved. It should be noted that the match in this case may be a partial match in which the name of the machining program is included in a part of the comment. Alternatively, the match may be a perfect match in which the comment and the name of the machining program match exactly.

In this machine tool system, the machine tool may include a machine storage unit in which the machining program is stored, and a copying ability changing unit that switches between a copying permitted state in which copying of the machining program stored in the machine storage unit to the mobile storage unit is permitted, and a copying prohibited state in which copying of the machining program stored in the machine storage unit to the mobile storage unit is prohibited.

By using the copying ability changing means, it is possible to prevent the machining program stored in the machine tool from being copied unintentionally.

An application program of the present invention, for solving the problem described above, is an application program installed in a mobile terminal capable of communicating with a machine tool that machines a workpiece in accordance with a machining program, the application program causing a processor of the mobile terminal to function as a link information generation unit that generates link information for associating the machining program with a specific file, and stores the specific file associated with the machining program and the generated link information in a mobile storage unit of the mobile terminal.

According to this application program, the link information and the associated file can be stored in the mobile storage unit.

According to the present invention, it is possible to provide a machine tool system and an application program with which a file associated with a machining program can be stored without using a storage unit of a machine tool.

### Brief Description of Drawings

FIG. 1 is a block diagram showing a configuration of a machine tool system according to an embodiment;
FIGS. 2A and 2B are views showing a screen displaying a list of machining programs, which is displayed when a link information generation unit shown in FIG. 1 is used;
FIG. 3 is a view showing a screen on which an operation window for a machining program is displayed on the machining program list screen shown in FIG. 2;
FIG. 4 is a view showing a screen displayed when "Link file" is selected on the screen shown in FIG. 3;
FIG. 5 is a view showing a screen displayed when "Select file" is selected on the screen shown in FIG. 4;
FIG. 6 is a flowchart showing a link information generation operation executed when a file storage location has been specified on the screen shown in FIG. 5;
FIG. 7 is a view showing an image of a management file for managing link information;
FIG. 8 is a view illustrating machining programs in which the same effect as that produced in a machining program associated by the link information is produced;
FIG. 9 is a flowchart showing a link information generation operation executed when "Take a photo" or "Take a video" is selected on the screen shown in FIG. 4;
FIG. 10 is a view similar to that of FIG. 2, showing the machining program list screen when link information has been generated for one of the machining programs;
FIG. 11 is a view showing a screen displaying a list of associated files, which is displayed when a thumbnail image 41A or a link mark 41B is touched on the screen shown in FIG. 10;
FIG. 12A is a view showing an image of a workpiece after machining, and FIG. 12B is a drawing showing the workpiece after machining;
FIG. 13A is a view showing a tooling list and FIG. 13B is a view showing a process chart;
FIG. 14 is a flowchart similar to that of FIG. 6, showing a link information generation operation executed when a storage location of a file to be associated has been specified in a machine tool system according to a first modification; and
FIG. 15 is a flowchart similar to that of FIG. 6, showing a link information generation operation executed when a storage location of a file to be associated has been specified in a machine tool system according to a second modification.

### Detailed Description

An embodiment of the present invention will be described below with reference to the figures.

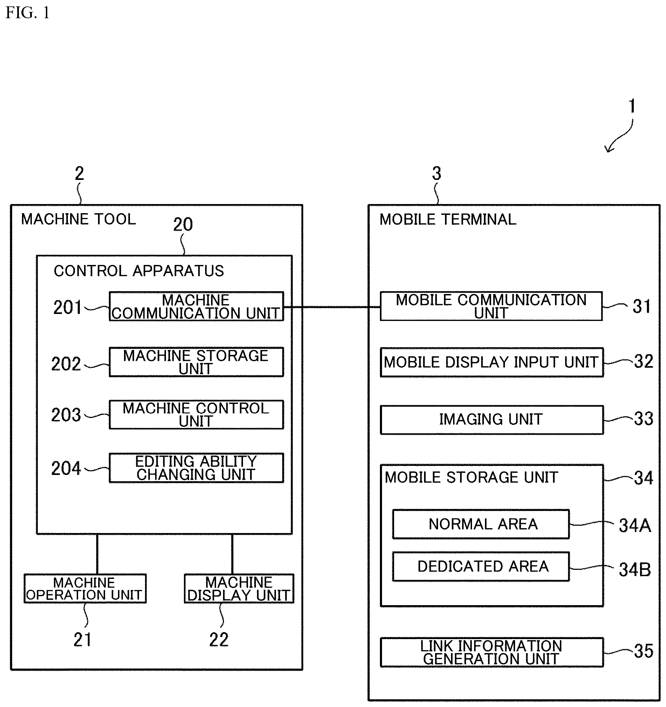

FIG. 1 is a block diagram showing a configuration of a machine tool system 1 according to this embodiment.

As shown in FIG. 1, the machine tool system 1 includes a machine tool 2 and a mobile terminal 3. The machine tool 2 is, for example, an NC (numerical control) lathe, an NC milling machine, an NC electrical discharge machine, an NC grinding machine, or a machining center. The machine tool 2 includes a control apparatus 20, a machine operation unit 21, and a machine display unit 22.

The control apparatus 20 is a computer that controls the machine tool 2. The control apparatus 20 includes a machine communication unit 201, a machine storage unit 202, a machine control unit 203, and an editing ability changing unit 204. The machine communication unit 201 performs two-way data communication with an external device such as the mobile terminal 3. The machine communication unit 201 performs wireless communication with a mobile communication unit 31 of the mobile terminal 3 through a wireless LAN (local area network). Thus, the machine communication unit 201 can transmit and receive files (data) to and from the mobile terminal 3, which is located in a remote location. It should be noted that the machine communication unit 201 and the mobile communication unit 31 may communicate via the Internet, or may communicate using Bluetooth (registered trademark), infrared communication, or the like, or may communicate using wired communication by means of a wired LAN, a USB (universal serial bus) cable, or the like.

The machine storage unit 202 is a non-volatile semiconductor memory such as a semiconductor memory like RAM. The machine storage unit 202 stores a machining program describing a machining operation of the machine tool 2.

The machine control unit 203 controls an actuator, a pump, and so on (not shown) provided in the machine tool 2, and operates mechanical parts of the machine tool 2 in accordance with the machining program stored in the machine storage unit 202. As a result, the workpiece is machined, whereby a product is manufactured.

The editing ability changing unit 204 sets the state of the machine storage unit 202 to either an editing permitted state, in which editing of the machining program stored in the machine storage unit 202 is permitted, or an editing prohibited state, in which editing is prohibited. The editing ability changing unit 204 corresponds to an example of a copying ability changing unit, the editing permitted state corresponds to an example of a copying permitted state, and the editing prohibited state corresponds to an example of a copying prohibited state. At times other than when editing is required, the editing prohibited state is set using the editing ability changing unit 204, and in so doing, unintentional editing of the machining program can be prevented. It should be noted that editing of the machining program denotes copying, deletion, and changing the name and content of the machining program.

The machine operation unit 21 is an operation panel constituted by a plurality of buttons provided on the machine tool 2. Further, the machine display unit 22 is a display provided on the machine tool 2.

The mobile terminal 3 includes the mobile communication unit 31, a mobile display input unit 32, an imaging unit 33, a mobile storage unit 34, and a link information generation unit 35. The mobile communication unit 31 performs two-way data communication with the machine tool 2 and an external device such as a cloud server (not shown).

The mobile display input unit 32 is a so-called touch panel in which a display unit and an input unit are integrated. The mobile display input unit 32 displays various operation screens and various information. The imaging unit 33 is a camera that captures still images and moving images. It should be noted that the display unit and the input unit may be provided separately.

The mobile storage unit 34 is a non-volatile memory such as a flash memory. A normal area 34A and a dedicated area 34B set by the link information generation unit 35 are formed in the mobile storage unit 34. The normal area 34A is an area in which a stored file can be viewed and changed using a general file management application program. The changes referred to here denote changes to the name of the file and changes to the content of the file. The dedicated area 34B is an area that can be viewed and modified only when the link information generation unit 35 is used. Files stored in the dedicated area 34B are not displayed by the file management application program, which is opened without using the link information generation unit 35, and therefore the existence thereof is hidden. Moreover, since the files stored in the dedicated area 34B are only displayed through the link information generation unit 35, the files cannot be changed.

The link information generation unit 35 is a functional unit realized by a link information generation application program installed in the mobile terminal 3 and a CPU (central processing unit) of the mobile terminal 3. This CPU is an example of a processor. When the link information generation unit 35 is installed, the dedicated area 34B is formed in the mobile storage unit 34 by the link information generation unit 35. Furthermore, the link information generation unit 35 forms a management file for managing link information in the dedicated area 34B. The link information generation unit 35 generates link information for associating a file stored in the mobile storage unit 34, the cloud server, or the like or an image file such as a still image file or a moving image file obtained by imaging using the imaging unit 33 with a machining program stored in the machine storage unit 202 or the mobile storage unit 34. The link information generation unit 35 stores the generated link information in the dedicated area 34B. Further, when a file stored in the normal area 34A, the cloud server, or the like has been associated with a machining program by link information, the link information generation unit 35 copies the associated file and stores the copied file in the dedicated area 34B as an associated file. It should be noted that instead of storing the link information and the copied associated file in the dedicated area 34B, the link information generation unit 35 may attach an attribute to the link information and the associated file indicating that the link information and the associated file can be viewed and modified only when the link information generation unit 35 is used, and store the resulting link information and associated file in the normal area 34A. The functions and operations of the link information generation unit 35 will be described in detail hereinafter.

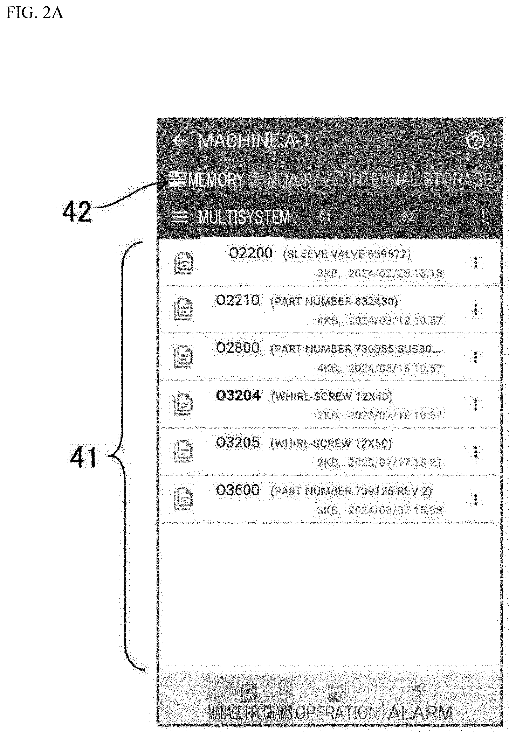

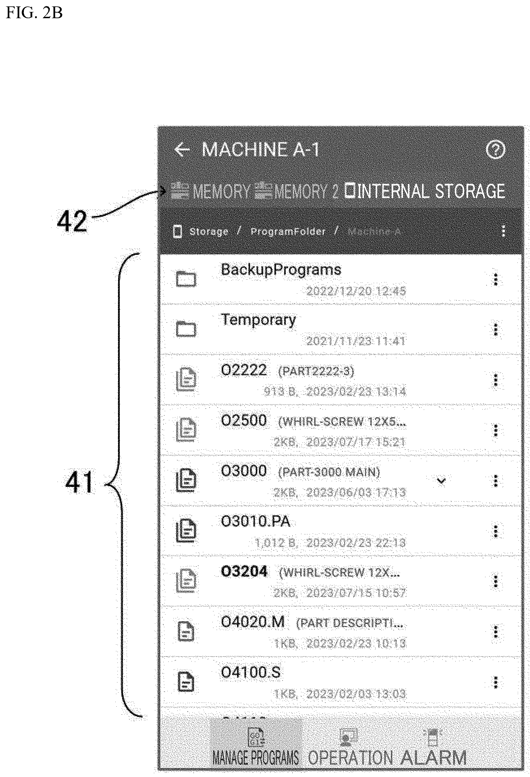

FIGS. 2A and 2B are views showing a list screen of machining programs displayed on the mobile display input unit 32 when the link information generation unit 35 shown in FIG. 1 is used. Unless otherwise specified, the operations and screen displays of the mobile terminal 3 described below are executed by functions of the link information generation unit 35.

When the link information generation unit 35 is activated in the mobile terminal 3 shown in FIG. 1, the mobile communication unit 31 communicates with the machine communication unit 201, and the link information generation unit 35 obtains the names of all of the machining programs stored in the machine storage unit 202 (see FIG. 1). It should be noted that the name of the machining program in this embodiment denotes the base name part of the file name of the machining program, excluding the extension. Further, in this embodiment, the name of the machining program is described using a combination of O and a four-digit number.

As shown in FIG. 2A, the link information generation unit 35 displays the obtained names of the machining programs in a name list display location 41 on the screen. A selection field 42 for selecting the machine storage unit 202 (see FIG. 1) and the mobile storage unit 34 (see FIG. 1) is also displayed on the screen. FIG. 2A shows an example of the screen in which the machine storage unit 202 is divided into two areas. It should be noted, however, that the machine storage unit 202 may include only one area, or may be divided into three or more areas. On this example screen, the machine storage unit 202 is described as "Memory" and "Memory 2", and the mobile storage unit 34 is described as "Internal storage". The selection field 42 also displays icons representing the machine storage unit 202 and the mobile storage unit 34. In FIG. 2A, the names of NC programs stored in the "Memory", which is one of the two areas into which the machine storage unit 202 is divided, are displayed on the mobile display input unit 32. When a user of the mobile terminal 3 selects (touches) the icon representing the mobile storage unit 34 or "Internal storage", the link information generation unit 35 displays the names of all of the machining programs stored in the mobile storage unit 34 on the mobile display input unit 32, as shown in FIG. 2B.

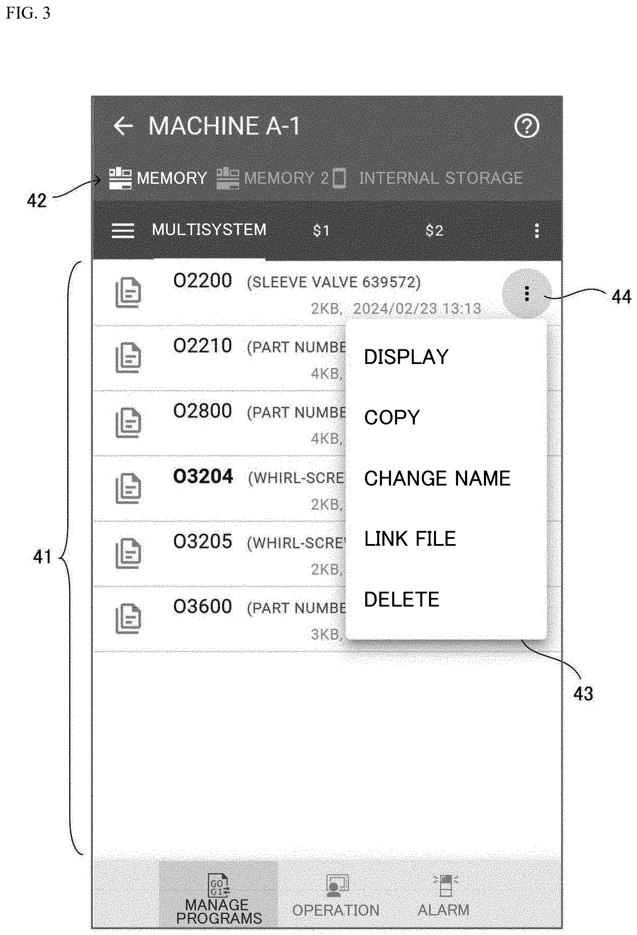

FIG. 3 is a view showing a screen on which an operation window 43 for a machining program is displayed on the list screen of machining programs shown in FIG. 2A. In FIG. 3, the operation window 43 for performing operations on the machining program displayed at the top of the machining program list screen and having the name O2200 is displayed. It should be noted that the operation window 43 is displayed as a pop-up when a setting button 44 at the right end of the same row as the name of a machining program displayed on the list screen is selected.

As shown in FIG. 3, five buttons, namely "Display", "Copy", "Change name", "Link file", and "Delete", are presented in the operation window 43. When "Display" is selected, the mobile communication unit 31 (see FIG. 1) and the machine communication unit 201 (see FIG. 1) communicate with each other, and the content of the operation subject machining program (in the example of FIG. 3, the machining program having the name O2200; likewise hereinafter) is displayed. In this display, the mobile terminal 3 (see FIG. 1) reads the machining program stored in the machine storage unit 202 (see FIG. 1), whereby the machining program is displayed. In other words, the machining program stored in the machine storage unit 202 is read directly, without copying the machining program to the mobile storage unit 34 (see FIG. 1). The "Copy" button is for copying the operation subject machining program. When "Copy" is selected, the operation subject machining program, stored in the machine storage unit 202, is copied to the mobile storage unit 34. The "Change name" button is for changing the name of the operation subject machining program. The "Link file" button is for associating a file selected by the user or an image file obtained by the imaging unit 33 with the operation subject machining program. The operation performed when this button is selected will be described in detail hereinafter. The "Delete" button is for deleting the operation subject machining program. It should be noted, however, that when the editing prohibited state in which editing is prohibited has been set by the editing ability changing unit 204 shown in FIG. 1, "Copy", "Change name", and "Delete" are grayed out, and all of the machining programs stored in the machine storage unit 202 cannot be copied, changed, or deleted. Furthermore, in the editing prohibited state, although the content of the machining program is displayed when "Display" is selected, the content of the machining program cannot be changed.

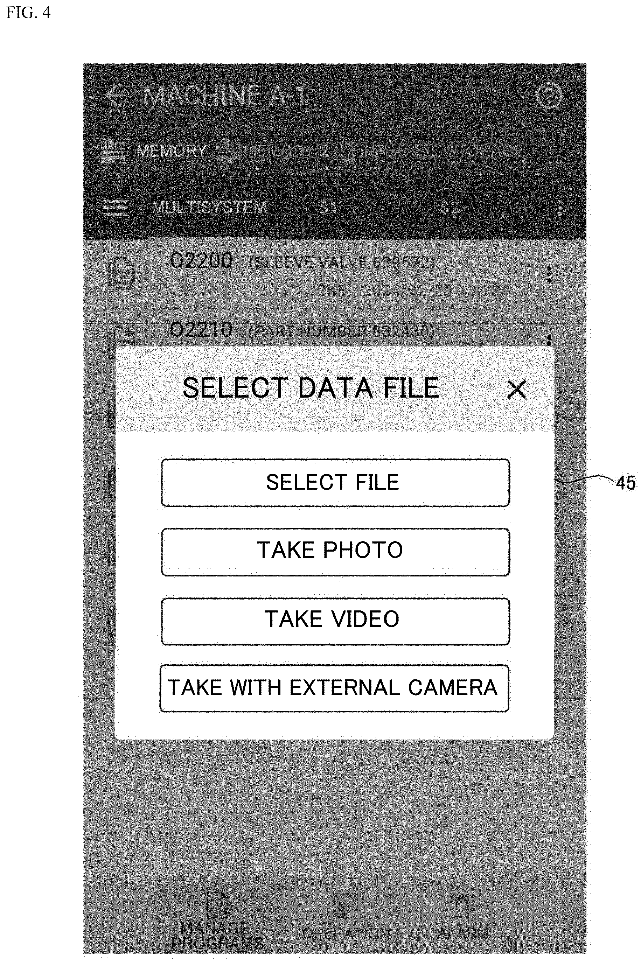

FIG. 4 is a view showing a screen displayed when "Link file" is selected on the screen shown in FIG. 3.

As shown in FIG. 4, when "Link file" is selected, the operation window 43 shown in FIG. 3 disappears, and instead a file selection window 45 pops up. Four buttons, namely "Select file", "Take a photo", "Take a video", and "Take with external camera", are presented in the file selection window 45.

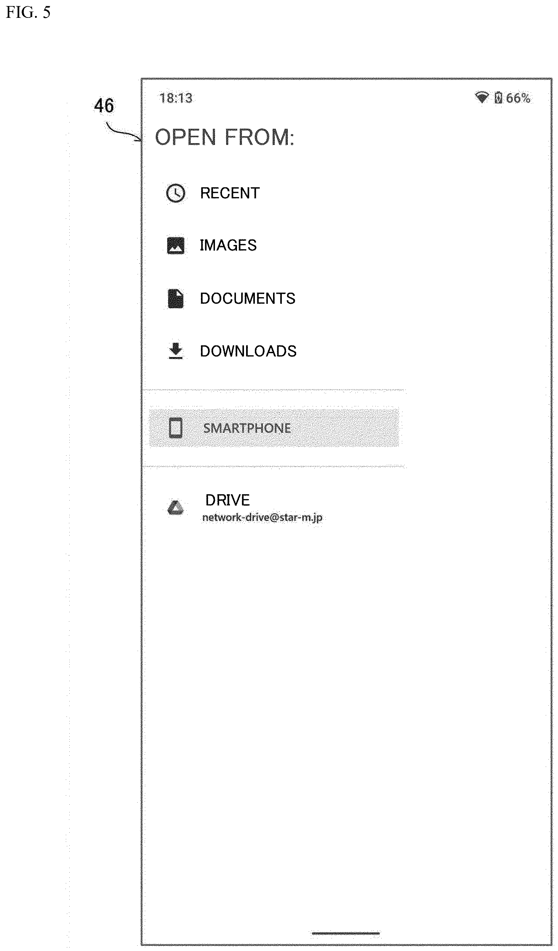

FIG. 5 is a view showing a screen displayed when "Select file" is selected on the screen shown in FIG. 4.

As shown in FIG. 5, when "Select file" is selected, a selection screen 46 for selecting a storage location in which a file is stored is displayed. Six buttons, namely "Recent", "Images", "Documents", "Downloads", "SMARTPHONE", and "Drive", are presented on the storage location selection screen 46. When "Recent" is selected, a list of files recently used in the mobile terminal 3 is displayed. When "Images" is selected, a list of image files stored in an image folder set in the mobile storage unit 34 (see FIG. 1) is displayed. When "Documents" is selected, a list of files stored in a document folder set in the mobile storage unit 34 is displayed. When "Downloads" is selected, a list of files stored in a folder in which files downloaded to the mobile terminal 3 are stored is displayed. When "SMARTPHONE" is selected, a list of files stored in a root folder of the mobile storage unit 34 is displayed. When "Drive" is selected, a list of files stored on a predetermined cloud server is displayed.

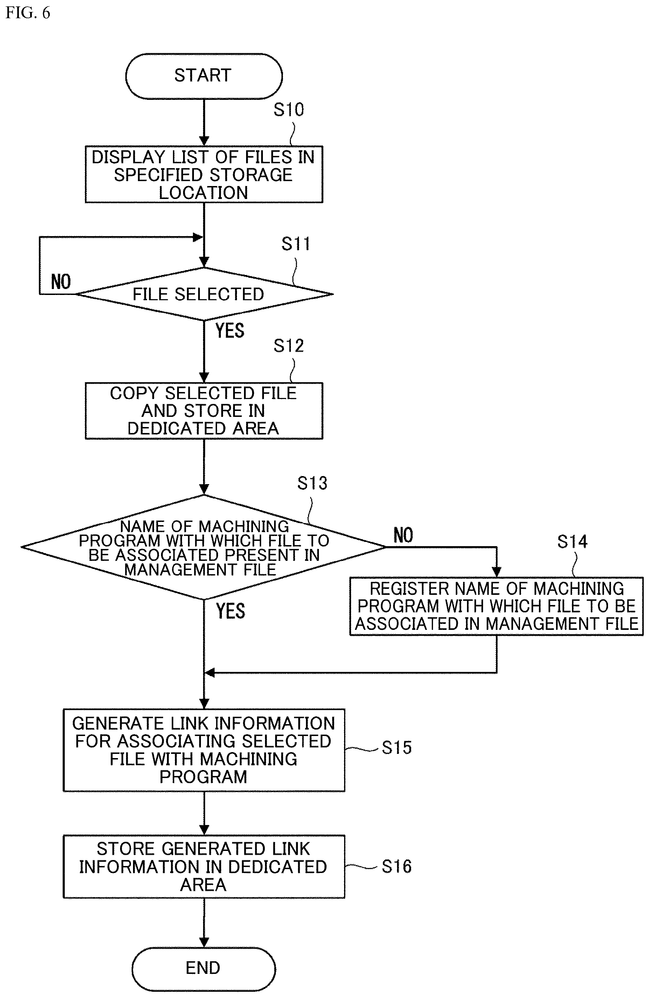

FIG. 6 is a flowchart showing a link information generation operation executed when a file storage location has been specified on the screen shown in FIG. 5.

As shown in FIG. 6, the link information generation unit 35 displays a list of the files in the specified storage location, such as a folder, on the mobile display input unit 32 (step S10) and then waits for a displayed file to be selected (step S11). The file selected at this time corresponds to an example of a specific file. It should be noted that a plurality of files can be selected at the same time. In this case, all of the selected files are examples of the specific file.

When a file is selected (YES in step S11), the link information generation unit 35 copies the selected file and stores the copied file as an associated file in the dedicated area 34B of the mobile storage unit 34 (step S12). The selected source file is kept as is. As a result, if the source file has been stored in the normal area 34A, the same file exists in both the normal area 34A and the dedicated area 34B.

Next, the link information generation unit 35 determines whether or not the name of the operation subject machining program with which the specific file is to be associated is already registered in the management file for managing the link information (step S13). As described above, the management file is a file generated by the link information generation unit 35 and stored in the dedicated area 34B. It should be noted that instead of the name of the machining program, other information by which an individual machining program can be identified, such as a hash value, for example, may be used as information for determining whether or not the machining program is already registered in the management file.

When the name of the machining program with which the specific file is to be associated is not registered in the management file (NO in step S13), the link information generation unit 35 registers the name of the machining program with which the specific file is to be associated in the management file as part of the link information (step S14).

When the name of the machining program is already registered in the management file (YES in step S13) or after the name of the machining program with which the specific file is to be associated is registered in the management file in step S14, link information for associating the specific file, i.e., the selected file, with the machining program is generated (step S15). Next, the link information generated by registering the generated link information in the management file so as to update the management file is stored in the dedicated area 34B

(step S16). This completes the link information generation operation performed when "Select file" is selected.

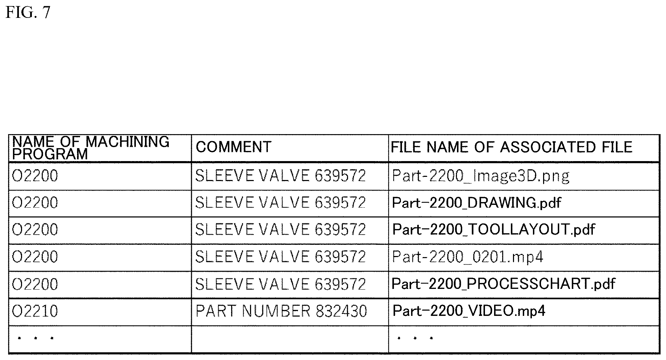

FIG. 7 is a view showing an image of the management file for managing the link information. It should be noted that the management file may have a format other than that shown in FIG. 7.

As shown in FIG. 7, the management file for managing the link information manages the existence of associations between machining programs and associated files by associating the file name of the associated file with the name of the machining program. FIG. 7 shows a management file including link information associating associated files named "Part-2200_Image3D.png", "Part-2200_Drawing.pdf", "Part-2200_ToolLayout.pdf", "Part-2200_0201.mp4", and "Part-2200_ProcessChart.pdf" with a machining program named "O2200" and having a comment "SLEEVE VALVE 639572" attached thereto, and link information associating an associated file named "Part-9876_Video.mp 4" with a machining program named "O2210" and having a comment "PART NUMBER 832430" attached thereto.

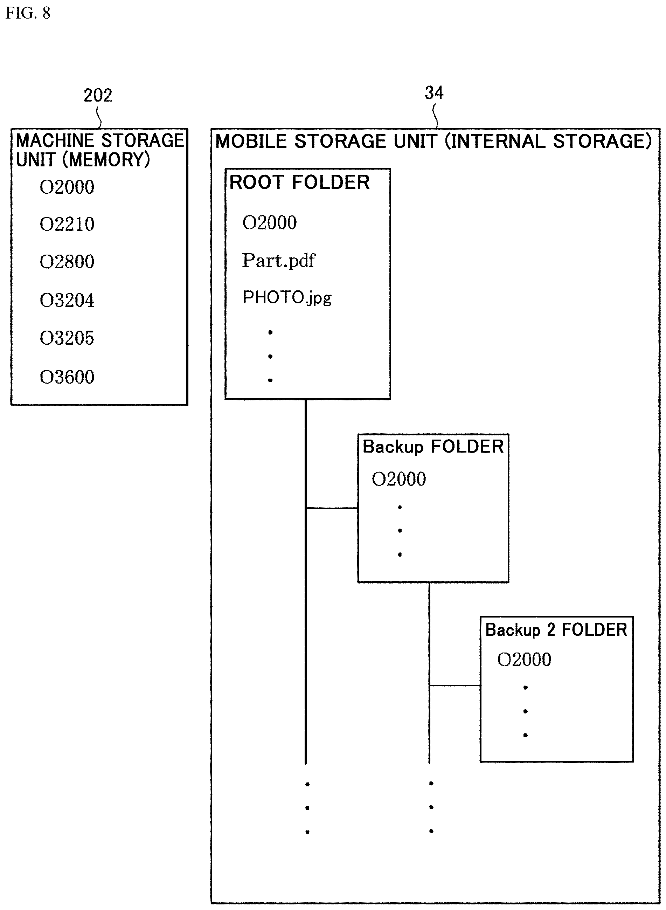

FIG. 8 is a view illustrating machining programs in which the same effect as that produced in the machining program associated by the link information is produced.

FIG. 8 shows NC programs and files stored in the machine storage unit 202 and the mobile storage unit 34. The NC programs and files are stored in the mobile storage unit 34 in a hierarchical structure. In the example shown in FIG. 8, the mobile storage unit 34 is provided with a root folder on the layer of upper level, a BACKUP folder on the first layer of the low level, and a BACKUP2 folder on the second layer of the low level. Moreover, an NC program with the name "O2000" is stored in each folder of the machine storage unit 202 and the mobile storage unit 34.

When link information is generated by the link information generation unit 35 (see FIG. 1) for one of the NC programs with the name "O2000", the same effect as that produced by generating the link information is produced in all of the NC programs with the same name in the other folders and the other storage unit. For example, when link information is generated for "O2000" in the machine storage unit 202, the same effect as that produced by generating the link information is produced in "O2000" on all levels of the mobile storage unit 34. Likewise in the opposite case, when link information is generated for "O2000" on any level of the mobile storage unit 34, the same effect as that produced by generating the link information is produced in "O2000" on the other levels of the mobile storage unit 34 and "O2000" in the machine storage unit 202.

It should be noted that when link information is generated for the NC program with the name "O2000", the same effect as that produced by generating the link information may be produced in all of the NC programs in the other folders and the other storage unit which have the same name and in which the comment written at the beginning of the program is an exact match. The comment written at the beginning of the program denotes the comment written in the position closest to the beginning of the machining program. Furthermore, when link information is generated for the NC program with the name "O2000", the same effect as that produced by generating the link information may be produced in all of the NC programs in which the comment written at the beginning of the program is an exact match, even if the names are different. Moreover, a configuration that makes it possible to select, by means of a setting, whether the targets in which the same effect is to be produced are the NC programs with the same name, the NC programs in which the name and the comment written at the beginning of the program are both the same, or the NC programs in which the comment written at the beginning of the program is the same may be employed.

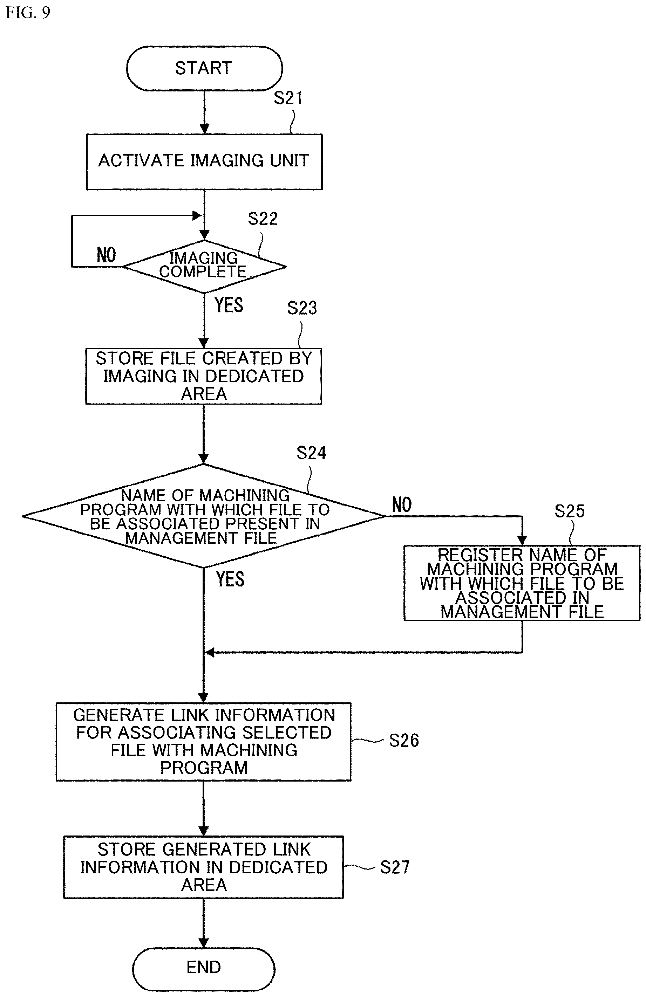

FIG. 9 is a flowchart showing a link information generation operation executed when "Take a photo", "Take a video", or "Take with external camera" is selected on the screen shown in FIG. 4. "Take a photo" and "Take a video" differ only in terms of whether a still image or a moving image is captured, while "Take with external camera" differs therefrom only in terms of whether imaging is performed by the imaging unit 33 or by an external camera. Hence, in the following description, "Take a photo", "Take a video", and "Take with external camera" will not be described separately. It should be noted that the external camera is a camera connected to the machine tool 2 or the mobile terminal 3 via the Internet, Bluetooth (registered trademark), or the like. The external camera includes an in-machine camera that is attached to the machine tool 2 in order to capture images of the machining status of the machine tool 2 and a product on which machining has been completed.

As shown in FIG. 9, the link information generation unit 35 first activates the imaging unit 33 (step S21) and then waits until the user completes imaging (step S22). It should be noted that although here, images of the workpiece turned into a product by completing the machining performed by the machine tool 2, the machining operation of the machine tool 2 when the machining has been completed normally, and so on are captured, images other than the product and the machining operation may also be captured. However, it is preferable to capture an image of an object or an operation related to the operation subject machining program.

When imaging has been completed (YES in step S22), the link information generation unit 35 stores an image file created by the imaging in the dedicated area 34B of the mobile storage unit 34 (step S23). The image file created at this time corresponds to an example of the specific file.

Next, the link information generation unit 35 determines whether or not the name of the machining program with which the specific file is to be associated is registered in the management file for managing the link information (step S24). When the name of the machining program with which the specific file is to be associated is not registered in the management file (NO in step S24), the link information generation unit 35 registers the name of the machining program with which the specific file is to be associated in the management file as part of the link information (step S25).

When the name of the machining program is already registered in the management file (YES in the step S24) or after registering the name of the machining program with which the specific file is to be associated in the management file in step S25, link information for associating the specific file, i.e., the image file obtained by the imaging, with the machining program is generated (step S26). Next, the link information generated by registering the generated link information in the management file so as to update the management file is stored in the dedicated area 34B (step S27). This completes the link information generation operation performed when "Take a photo" or "Take a video" is selected.

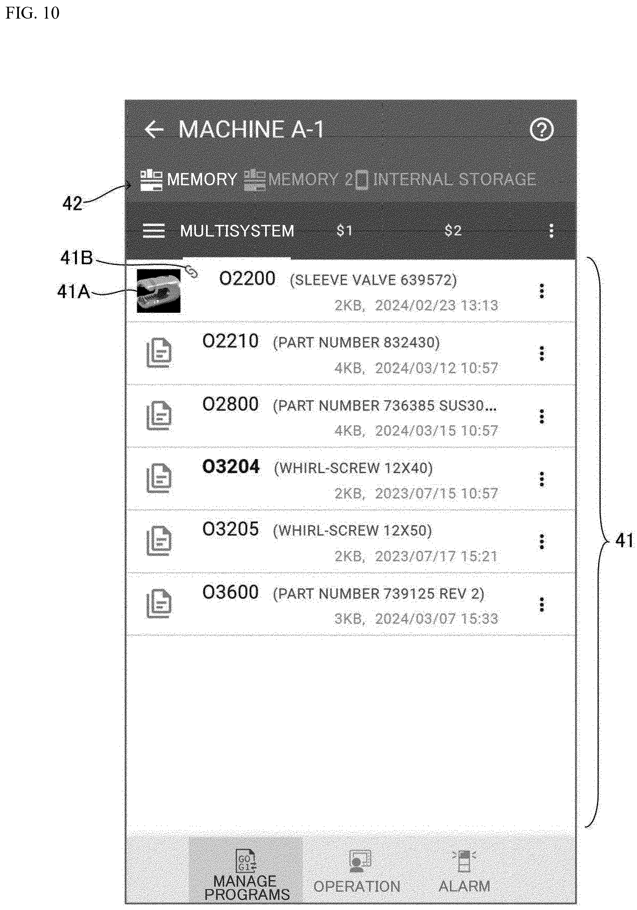

FIG. 10 is a view similar to that of FIGS. 2A and 2B, showing the machining program list screen when link information has been generated for one of the machining programs.

As shown in FIG. 10, when the link information generation unit 35 is activated in a state in which the link information has been generated, the link information generation unit 35 attaches a thumbnail image 41A and a link mark 41B to the name of the machining program for which the link information has been generated, and displays the thumbnail image 41A and the link mark 41B in the name list display location 41. FIG. 10 shows an example in which link information has been generated for the machining program with the name "O2200". When an image file has been associated as the associated file, the thumbnail image 41A is obtained by the link information generation unit 35 by compressing and displaying the image in the image file. The link mark 41B is a mark indicating that link information has been generated for the machining program. When the user touches the thumbnail image 41A or the link mark 41B, the associated file associated with the subject machining program "O2200" is displayed. It should be noted that, as described above, when link information has been generated for a certain machining program, the link information generation unit 35 also attaches the thumbnail image 41A and the link mark 41B to the NC programs having the same name on all levels of the mobile storage unit 34 and in the machine storage unit 202, and displays the attached thumbnail image 41A and the link mark 41B.

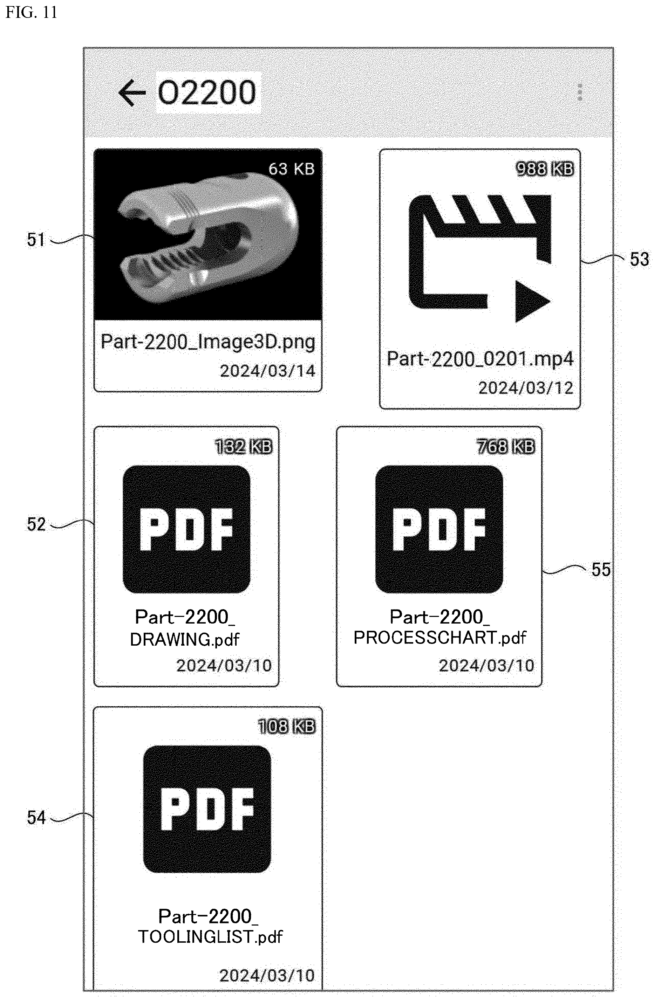

FIG. 11 is a view showing a screen displaying a list of associated files, which is displayed when the thumbnail image 41A or the link mark 41B is touched on the screen shown in FIG. 10.

As shown in FIG. 11, five associated files, namely an image file 51, a drawing file 52, a moving image file 53, a tooling list file 54, and a process chart file 55, are associated with the machining program "O2200" as associated files. A moving image of a normal machining operation of the machine tool 2 when a product is manufactured by the associated machining program is stored in the moving image file 53. It is also possible to associate with the NC program a machine setting file that describes data on a tool unit attached to the machine tool 2 and data on the shape offset and wear offset of the attached tool, and that is transmitted to the machine tool 2 in order to set these data in the machine tool 2.

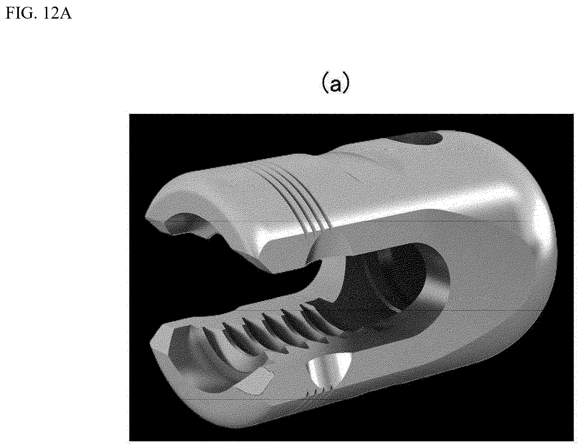

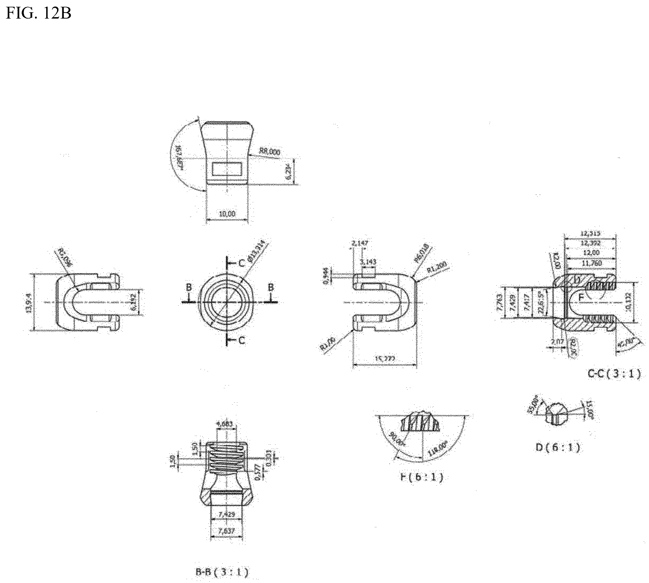

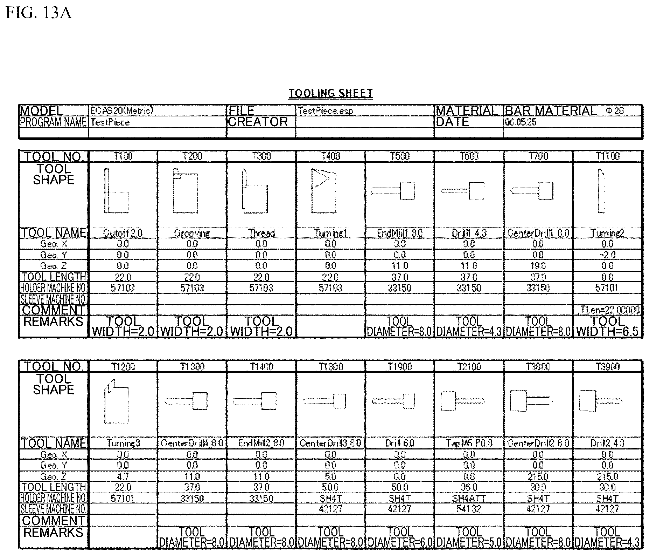

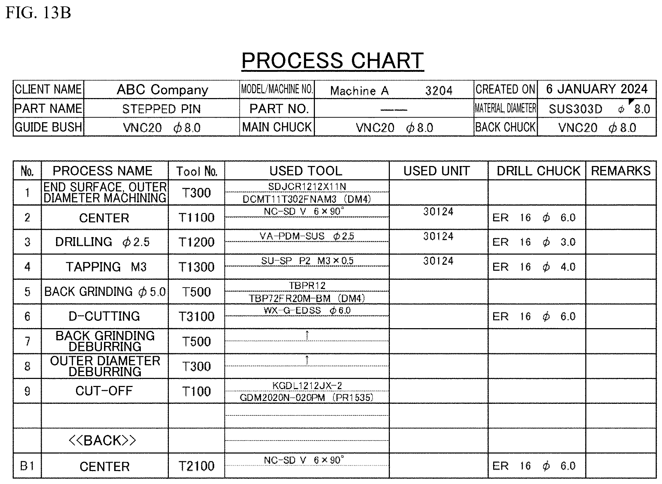

FIG. 12A is a view showing an image of a workpiece after machining, and FIG. 12B is a drawing showing the workpiece after machining. FIG. 13A is a view showing a tooling list, and FIG. 13B is a view showing a process chart. The views shown in FIGS. 12A and 12B and FIGS. 13A and 13B are displayed on the mobile display input unit 32 by selecting files on the screen shown in FIG. 11.

As shown in FIG. 12A, the image data of the product obtained by machining the workpiece using the associated machining program is stored in the image file 51. Data obtained as a result of imaging by the imaging unit 33 or data created by three-dimensional CAD or CG is used as the image data. As shown in FIG. 12B, drawing data showing the dimensions and accuracy of the product obtained by machining the workpiece using the associated machining program is stored in the drawing file 52. As shown in FIG. 13A, tooling list data indicating the tool names and tool shapes of tools required for the machining and the respective attachment positions of the tools is stored in the tooling list file 54. Tooling list data indicating the tool names and tool shapes of the tools required for the machining performed using the associated machining program and the respective attachment positions of the tools is stored. As shown in FIG. 13B, data of a process chart showing the order of the machining performed using the associated machining program is stored in the process chart file 55.

It is not necessary to associate all of the files shown in FIG. 11 with the machining program. However, selection of the machining program is made easier by storing the image file 51 or the drawing file 52 as an associated file. In addition, recognizing an abnormal operation of the machine tool 2 is made easier by storing the moving image file 53 as an associated file. Moreover, preparation work is made easier by storing the tooling list file 54 or the process chart file as an associated file. Therefore, it is preferable that at least one of these files is associated with the machining program using the link information generation unit 35. It should be noted that an image file, a moving image file, a PDF file, a CAD file, or the like that includes the image data may be freely selected from among the associated files as the thumbnail image used on the screen showing the machining program list screen.

According to the machine tool system 1 of the embodiment described above, since the link information and the associated files are stored in the mobile storage unit 34, the link information and the associated files can be stored in the machine tool system 1 without using the machine storage unit 202 of the machine tool 2. More specifically, since image files, moving image files, and drawing files have a large amount of data, when these files are stored in the machine storage unit 202, the capacity available for storing machining programs is greatly reduced, but with the configuration of this embodiment, it is possible to avoid a reduction in the capacity for storing machining programs. Furthermore, the content of the associated files and the content of the machining programs can be viewed by the user without moving in front of the machine display unit 22 of the machine tool 2, and therefore the convenience of the machine tool system 1 is enhanced. It should be noted that a system configuration in which a server is connected to the machine tool 2 and the used capacity of the machine storage unit 202 is suppressed by storing the associated files and the link information in the server may also be considered. With this system configuration, however, a server must be prepared, and therefore a problem arises in that the machine tool system 1 becomes expensive. The machine tool system 1 of this embodiment does not require a server, and therefore an advantage is obtained in that the machine tool system 1 can be constructed inexpensively.

In addition, since the link information generation unit 35 stores the associated files in the mobile storage unit 34 in a state in which the associated files can be viewed and modified only when the link information generation unit 35 is used, unintentional alteration of the associated files can be prevented. The link information generation unit 35 forms the dedicated area 34B in the mobile storage unit 34, and when a specific file specified by the user is located in the normal area 34A, copies the file to the dedicated area 34B and stores the file therein. Thereafter, the source file is kept in the normal area 34A in a state in which the file can be viewed and modified without using the link information generation unit 35. Thus, when, for example, the user wishes to create a drawing, a tooling list, or a process chart for a similar product, the user can create the drawing, tooling list, or process chart on the basis of the source file. Even when the file stored in the normal area 34A is altered, the associated file stored in the dedicated area 34B is not affected thereby, and thus it is possible to prevent unintentional deletion of the association between the machining program and the associated file.
It should be noted that in this embodiment, the files stored in the dedicated area 34B can be viewed and modified by an application program opened using the link information generation unit 35 as well as by the link information generation unit 35 itself. As a result, the convenience of the user is enhanced.

In addition, by providing the editing ability changing unit 204 for switching between the editing permitted state in which editing of the machining program stored in the machine storage unit 202 is permitted and the editing prohibited state in which editing is prohibited such that in the editing prohibited state, the machining program cannot be copied to the mobile storage unit 34, it is possible to prevent the machining program stored in the machine tool 2 from being unintentionally copied.

Next, a modification of the machine tool system 1 described heretofore will be described, focusing on differences with the configurations described heretofore.

The machine tool system 1 according to a first modification differs from the previous embodiment in that the selection operation performed when "Select file" is selected in the file selection window 45 shown in FIG. 4 is automatic. More specifically, in the machine tool system 1 of the first modification, a file having a file name that partially or fully matches the name of the operation subject machining program is automatically selected from the files stored in the storage location specified on the screen shown in FIG. 5. For example, a check button for specifying "Automatic selection" may be provided on the screen shown in FIG. 5, and when the check button is checked, the operation of the first modification may be executed. In other words, a configuration in which it is possible to choose between the operation of the previous embodiment and the operation of the first modification may be employed.

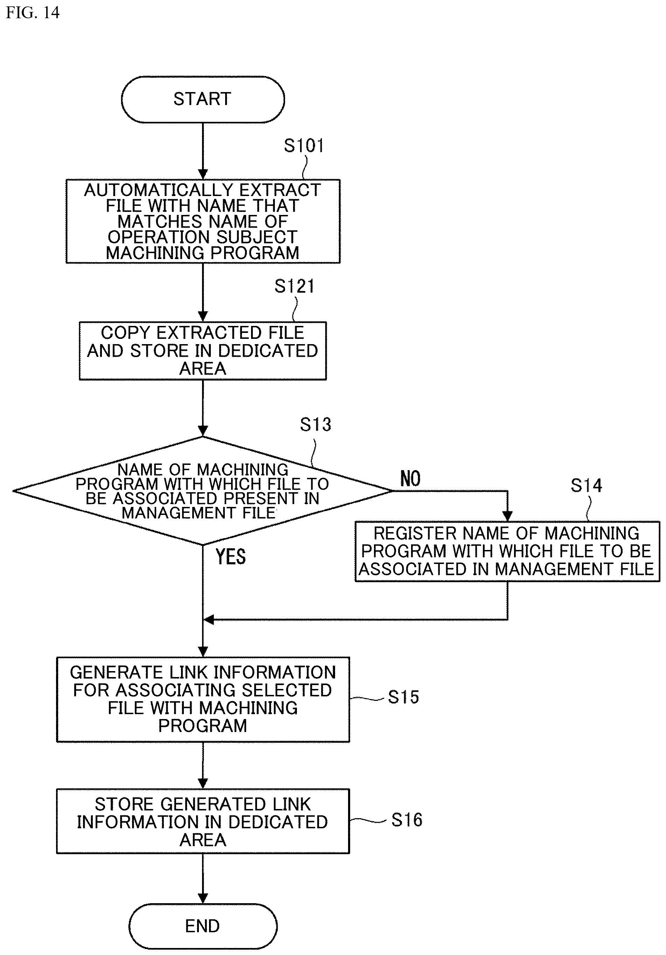

FIG. 14 is a flowchart similar to that of FIG. 6, showing the link information generation operation executed when the storage location of a file to be associated has been specified in the machine tool system 1 according to the first modification.

As shown in FIG. 14, the link information generation unit 35 of the first modification automatically extracts all of the files having names that partially match the name of the operation subject machining program from the files in the specified storage location (step S101). In the first modification, the files extracted at this time correspond to examples of the specific file. It should be noted that only files having names that exactly match the name of the machining program may be extracted as the specific file. Further, a configuration in which it is possible to switch between extracting files having names that partially or fully match the name of the machining program and extracting only files having exactly matching names may be employed.

The link information generation unit 35 then copies the extracted files and stores the copied files in the dedicated area 34B of the mobile storage unit 34 (step S121). At this time, the source files are kept as is at the specified storage location. The following steps S13 to S16 are the same as in the operation of the previous embodiment, and therefore description thereof has been omitted.

In the machine tool system 1 of the first modification, in addition to the effects of the previous embodiment, associations are made automatically simply by matching the names of the files to be associated with the name of the machining program, and therefore an effect for improving the operability of the machine tool system 1 can be expected.

Next, a machine tool system of a second modification will be described. As in the case of the first modification, the machine tool system 1 of the second modification differs from the previous embodiment in that the selection operation performed when "Select file" is selected in the file selection window 45 shown in FIG. 4 is automatic.
More specifically, in the machine tool system 1 of the second modification, a file in which the name of the operation subject machining program and the comment written at the beginning of the machining program match is automatically selected from the files stored in the storage location specified in FIG. 5. For example, a check button for specifying "Automatic selection" may be provided on the screen shown in FIG. 5, and when the check button is checked, the operation of the second modification may be executed. In other words, a configuration in which it is possible to choose between the operation of the previous embodiment and the operation of the second modification may be employed. Furthermore, a configuration in which it is possible to choose between the operation of the previous embodiment, the operation of the first modification, and the operation of the second modification may be employed.

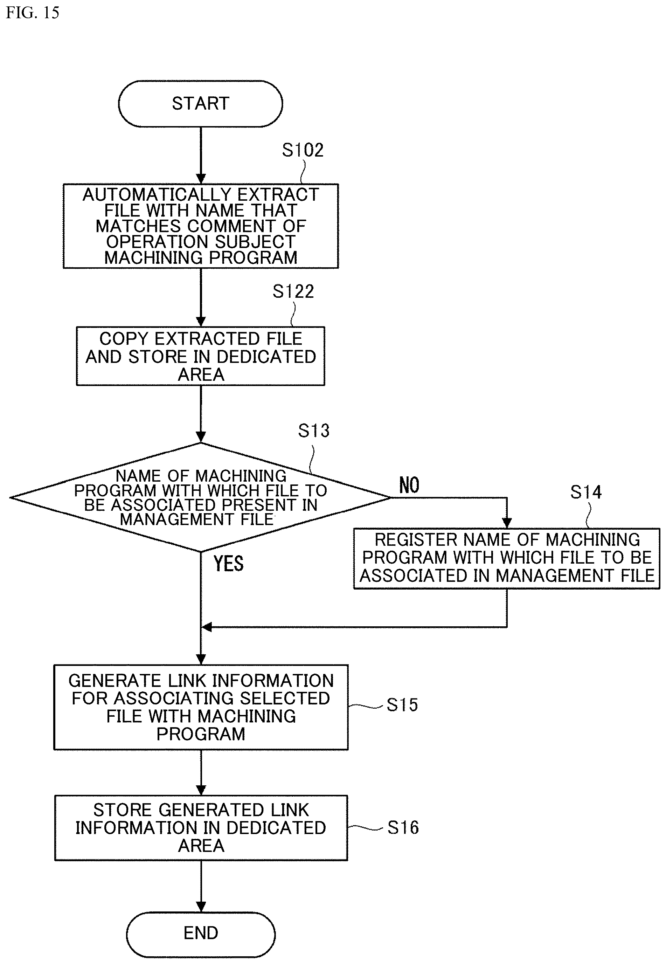

FIG. 15 is a flowchart similar to that of FIG. 6, showing the link information generation operation executed when the storage location of a file to be associated has been specified in the machine tool system 1 according to the second modification.

As shown in FIG. 15, the link information generation unit 35 of the second modification automatically extracts all the files having file names that partially or fully match the comment written at the beginning of the operation subject machining program from the files in the specified storage location, such as a folder (step S102). In the second modification, the files extracted at this time correspond to examples of the specific file. It should be noted that only files in which the comment exactly matches the name of the machining program may be extracted as the specific file. Further, a configuration in which it is possible to switch between extracting files having file names that partially or fully match the comment and extracting only files having file names that exactly match the comment may be employed.

The link information generation unit 35 then copies the extracted files and stores the copied files in the dedicated area 34B of the mobile storage unit 34 (step S122). At this time, the source files are kept as is at the specified storage location. The following steps S13 to S16 are the same as in the operation of the previous embodiment, and therefore description thereof has been omitted.

Likewise in the machine tool system 1 of the second modification, in addition to the effects of the previous embodiment, associations are made automatically simply by matching the names of the files to be associated with the comment written at the beginning of the machining program, and therefore an effect for improving the operability of the machine tool system 1 can be expected.

The present invention is not limited to the embodiment described above, and can be variously modified within the scope set forth in the aspects. For example, in the description of the embodiment, a specific file located in the normal area 34A is copied and stored in the dedicated area 34B, but it is also possible to move the specific file to the dedicated area 34B as an associated file without copying the file. This prevents the content of the associated file from being leaked. Further, in step S23, the image file created by imaging using the imaging unit 33 may be stored not only in the dedicated area 34B but also in the normal area 34A.

It should be noted that components included only in the description of the above modifications may also be applied to other modifications.

## Claims

1. A machine tool system comprising a machine tool that machines a workpiece in accordance with a machining program, and a mobile terminal capable of communicating with the machine tool,
wherein the mobile terminal includes a link information generation unit that generates link information for associating the machining program with a specific file, and a mobile storage unit, and
the link information generation unit stores the generated link information in the mobile storage unit, and stores the specific file associated with the machining program in the mobile storage unit as an associated file.

2. The machine tool system according to claim 1, wherein the link information generation unit stores at least one of an image file of the workpiece after machining, a drawing file showing the workpiece after machining, a moving image file showing a normal machining operation of the machine tool, a tooling list file showing tools necessary for the machining and attachment positions, and a process chart file showing the order of the machining in the mobile storage unit as the associated file.

3. The machine tool system according to claim 1 or 2, wherein the link information generation unit stores the associated file in the mobile storage unit in a state in which the associated file can be modified only when the link information generation unit is used.

4. The machine tool system according to claim 1 or 2, wherein the link information generation unit forms a dedicated area that can be modified only when the link information generation unit is used in the mobile storage unit, and when a file stored in a normal area that can be modified without using the link information generation unit is associated with the machining program as the specific file, the link information generation unit copies the file located in the normal area and stores the copied file in the dedicated area as the associated file.

5. The machine tool system according to claim 1 or 2, wherein, when the name of a file stored in the mobile storage unit matches the name of the machining program, the link information generation unit generates the link information for associating the file with the machining program as the specific file.

6. The machine tool system according to claim 1 or 2, wherein, when the name of a file stored in the mobile storage unit matches a comment written at the beginning of the machining program, the link information generation unit generates the link information for associating the file with the machining program as the specific file.

7. The machine tool system according to claim 1 or 2, wherein the machine tool includes a machine storage unit in which the machining program is stored, and a copying ability changing unit that switches between a copying permitted state in which copying of the machining program stored in the machine storage unit to the mobile storage unit is permitted, and a copying prohibited state in which copying of the machining program stored in the machine storage unit to the mobile storage unit is prohibited.

8. An application program installed in a mobile terminal capable of communicating with a machine tool that machines a workpiece in accordance with a machining program, the application program causing
a processor of the mobile terminal to function as
a link information generation unit that generates link information for associating the machining program with a specific file, and stores the specific file associated with the machining program and the generated link information in a mobile storage unit of the mobile terminal.
